# EUROPÄISCHE PATENTSCHRIFT

(11) **EP 2 876 146 B1**
(45) Veröffentlichungstag und Bekanntmachung des Hinweises auf die Patenterteilung: **05.09.2018**
(21) Anmeldenummer: 14003454.7
(22) Anmeldetag: 08.10.2014
(51) Int. Cl.: C10G 1/10

(54) **VERFAHREN UND ANLAGE ZUM AUFBEREITEN VON KUNSTSTOFFWERTSTOFFEN**
Method and assembly for the treatment of recycled plastics
Procédé et installation de préparation de substances de valeur en plastique

(30) Priorität: 14.10.2013 CH 17542013
(43) Veröffentlichungstag der Anmeldung: 27.05.2015
(73) Patentinhaber: Weser, Gerold, 5406 Rütihof/Baden (CH)
(72) Erfinder: Weser, Gerold, 5406 Rütihof/Baden (CH)
(74) Vertreter: Rüedi, Regula Béatrice

(56) Entgegenhaltungen:
- WO-A1-2005/071043
- WO-A2-2008/022790
- US-A- 6 011 187
- US-A1- 2013 153 394
- US-B1- 6 172 275

## Beschreibung

### Hintergrund der Erfindung

Die Erfindung betrifft ein Verfahren und eine Anlage zum Aufbereiten von Kunststoffwertstoffen, insbesondere Kunststoffwertstoffen auf Polyolefinbasis, unter Überführung derselben in Kohlenwasserstoffe unterschiedlicher Länge.

### Stand der Technik

In Anbetracht der endlichen Erdölreserven und des steigenden Verbrauchs an Kunststoffen gewinnt die Aufbereitung von Kunststoffabfällen (Kunststoffwertstoffen) immer mehr an Bedeutung.

Es sind bereits einige Verfahren zur Kunststoffwertstoff-Aufbereitung bekannt doch haben diese noch diverse Nachteile.

Aus der WO 2005/071043 A1 ist ein Aufbereitungsverfahren bekannt, bei dem Kunststoffwertstoffe zu Öl verarbeitet werden.

Dabei werden aus Kunststoffwertstoffen und/oder aus ölhaltigen Reststoffen fraktionierte Kohlenwasserstoffe gewonnen, wobei die Kunststoffwertstoffe und/oder Reststoffe zuerst nach Sorten sortiert und unter Verwendung eines Eintragungssystems unter Luftabschluss verdichtet werden. Die verdichtete Masse wird einem Aufschmelzbehälter zugeführt und darin aufgeheizt, so dass eine Auftrennung in eine erste Flüssigphase, eine erste Gasphase und einen Rückstandanteil stattfindet, wonach die Flüssigphase und die erste Gasphase in einen Verdampfungsbehälter transportiert werden, in welchem unter weiterem Wärmeeintrag eine zweite Flüssigphase und eine zweite Gasphase entsteht, wobei die zweite Flüssigphase in einen Nacherhitzer überführt und dort unter weiterem Wärmeeintrag weiter erhitzt wird, so dass eine dritte Gasphase entsteht, wonach die zweite Gasphase aus dem Verdampfungsbehälter und die dritte Gasphase aus dem Nacherhitzer einem Crackreaktor zugeführt werden, wo ein weiteres Aufbrechen (Cracken) der langkettigen Kohlenwasserstoffe in kurzkettige Kohlenwasserstoffe stattfindet und das entstandene Ölgas danach einem Kondensator zugeführt wird, in welchem das Ölgas zu flüssigem Öl kondensiert wird, wobei das Öl das Zielprodukt darstellt.

Dieses Verfahren wird den heutigen Umweltanforderungen in Bezug auf die Schwefel- und Chlorgehalte nicht gerecht, führt zu einem hohen Anteil an kohlenstoffreichen Rückständen und weist Mängel auf hinsichtlich Flexibilität und Qualität des Endproduktes.

WO 2008/022790 beschreibt ein Verfahren zum Aufbereiten von kunststoffhaltigen Abfällen und organischen Flüssigkeiten auf der Basis von Erdöl, Speiseöl, Fetten oder dergleichen, mit den Schritten:
- Eintragen des Stoffgemischs in einen Reaktor, der in eine Schmelz- und eine Crackzone unterteilt ist oder in zwei hintereinander geschalteten Reaktoren
- Aufschmelzen des Stoffgemischs in einer Schmelzzone des Reaktors bei 250°C bis 350°C,
- Austragen von Störstoffen aus der Schmelze
- Cracken von in der Schmelze enthaltenen langkettigen Polymeren in einer Crackzone des Reaktors, bei 420°C bis 450°C, bis diese in den gasförmigen Zustand übergehen
- Austragen der Gasphase aus dem Reaktor
- Kondensieren der Gasphase in einem Kühler und
- Entfernen von Verunreinigungen aus der nach dem Kühlen (Quenchen) vorliegenden Leichtflüssigkeit
- Speichern der Leichtflüssigkeit.

Die nach der Crackzone des Reaktors vorliegende Gasphase wird beispielsweise einer Destillationskolonne zugeführt, die derart betrieben wird, dass langkettige Polymere kondensieren und wieder der Crackzone des Reaktors zugeführt werden. Relativ kurzkettige, nach der Destillationskolonne und einem sich daran anschliessenden Kühler gasförmig vorliegende Kohlenwasserstoffe können als Brennstoff energetisch genutzt werden.

Bei den Verfahren des Stands der Technik fallen relativ grosse Mengen Schlacke an und die Endprodukte sind nur mässig an die Bedürfnisse anpassbar und von mässiger Reinheit.

### Darstellung der Erfindung

Ziel der vorliegenden Erfindung war es, ein verbessertes Verfahren zur Aufbereitung von Kunststoffwertstoffen und eine Anlage zur Durchführung dieses Verfahrens bereitzustellen. Die Verbesserungen umfassen Reduktion der Schlackebildung und/oder flexiblere Produktsteuerung und/oder optimierter Reinheit der Produkte.

Dieses Ziel wird erreicht durch Bereitstellen eines Verfahrens zur Gewinnung von Kohlenwasserstoffen, insbesondere einzelner Fraktionen von Kohlenwasserstoffen, aus Polyolefin-Kunststoffwertstoffen mittels pyrolytischen Crackens, wobei
(i) die Kunststoffwertstoffe unter Verwendung eines Eintragungssystems unter Luftabschluss bzw. in Inertgas einem Mischgefäss zugeführt werden, in dem sie mit Dieselöl zu einer ersten Flüssigphase oder Dispersion, einer Kunststoff/Öl-Mischung, vermischt und anschliessend nacheinander drei Heizzonen bzw. Wärmetauschern und einem Crackreaktor zugeführt werden, wobei
(ii) vor dem Eingang zu einer ersten Heizzone aber nach einer Pumpe, welche diese erste Flüssigphase oder Dispersion in eine nachfolgende Reihe von 3 Heizzonen pumpt, wird der größere Teil des Produkt-Öls entfernt und wieder zurück in den Mischbehälter oder die Produkt-Öl-Zuleitung geführt,
(iii) in der ersten Heizzone bzw. dem ersten Wärmetauscher bei 105 bis 125°C in einer ersten Gasphase Wasserdampf abgeführt wird,
(iv) in einer zweiten Heizzone bzw. einem zweiten Wärmetauscher bei einer Temperatur von 180 bis 250°C eine Auftrennung in
   - eine zweite Gasphase, die primär aus sauren Gasen besteht und über einen Entgasungsdom entfernt wird, und
   - eine zweite Flüssigphase oder Dispersion, in der ein Teil der Kunststoffwertstoffe als Schmelze vorliegt, erfolgt
(v) in einer dritten Heizzone bzw. einem dritten Wärmetauscher bei einer Temperatur von 300°C bis 380°C die zweite Flüssigphase weiter aufgeschmolzen und anschliessend zusammen mit bereits gebildeten kohlenwasserstoffhaltigen Dämpfen
(vi) dem Crackreaktor zugeführt wird, in dem die geschmolzenen Kohlenwasserstoffe bei ca. 400°C rein thermolytisch aufgespalten, d.h. gecrackt, werden, wobei die gasförmigen Kohlenwasserstoffe einem Partialkondensator zugeführt werden, in dem langkettige Kohlenwasserstoffe kondensieren und in die dritte Heizzone bzw. den dritten Wärmetauscher zurückgeführt werden,
(vii) die Gase aus dem Partialkondensator einer Destillationskolonne zugeführt werden, in der sie in eine gasförmige und eine flüssige Fraktion zerlegt und aus der die flüssige Fraktion als Produkt-Diesel, die gasförmige Fraktion als Leichtsieder abgezogen werden.

Ein weiterer Gegenstand dieser Erfindung ist eine Anlage gemäss Anspruch 9. Diese ist geeignet zur Durchführung des erfinderischen Verfahrens und zeichnet sich dadurch aus, dass sie unter anderem ein Mischgefäss, eine Pumpe, drei Heizzonen bzw. Wärmetauscher, einen Crackreaktor, einen Partialkondensator, eine Destillationskolonne und einen vierten Wärmetauscher umfasst, wobei das Mischgefäss über die Pumpe mit der ersten Heizzone bzw. dem ersten Wärmetauscher verbunden ist, die erste Heizzone bzw. der erste Wärmetauscher mit der zweiten Heizzone bzw. dem zweiten Wärmetauscher, die zweite Heizzone bzw. der zweiten Wärmetauscher mit der dritten Heizzone bzw. dem dritten Wärmetauscher und die dritte Heizzone bzw. der dritte Wärmetauscher mit dem Crackreaktor, der Crackreaktor mit einem Partialkondensator und der Partialkondensator mit einer Destillationskolonne, wobei die Temperatur in allen drei Heizzonen bzw. Wärmetauschern und im Crackreaktor unabhängig von einander regulierbar ist.

Das erfindungsgemässe Verfahren wird nachfolgend für eine bevorzugte erfindungsgemässe Anlage beschrieben.

Gereinigte und vorsortierte Polyolefin-Kunststoffwertstoffe werden in einem Bunker gelagert. Die Vorsortierung kann mittels gängiger Verfahren durchgeführt werden. Dabei werden die Kunststoffe, z.B. PVC, PET anhand ihrer IR-Spektren oder anderer Merkmale erkannt und z.B. mittels eines punktuell platzierbaren Luftstroms entfernt. Trotz dieser Vorsortierung enthalten die Kunststoffwertstoffe möglicherweise immer noch geringe Anteile an Störstoffen, wie z.B. chlor- und/oder schwefelhaltige Verbindungen, Gummi, Metalle, Sand etc. Da das Aufbereitungsverfahren zur Verhinderung unerwünschter Oxidation unter weitgehendem Sauerstoffausschluss durchgeführt werden muss, werden die Kunststoffwertstoffe der Anlage durch ein vorzugsweise zweistufiges Pufferbehältersystem zugeführt. Der erste Pufferbehälter wird kontinuierlich gefüllt, die Luft durch Stickstoff ersetzt und der Behälter anschliessend diskontinuierlich entleert. Der zweite Pufferbehälter speist den Kunststoff kontinuierlich in das System ein und wird diskontinuierlich gefüllt. Die Ausgaberate vom Puffersystem in ein Mischgefäss wird beispielsweise mittels einer Lastzelle gemessen.

Im Mischgefäss wird dem Kunststoffwertstoff Dieselöl zugeführt, um die Förderbarkeit zu verbessern. Dieses Dieselöl ist vorzugsweise Dieselöl, das mittels dem erfindungsgemässen Verfahren gewonnen wurde und deshalb auch als Produkt-Diesel oder Produkt-Öl bezeichnet wird, sowie vor der ersten Heizzone bzw. einem ersten Wärmetauscher abgezogenes und entweder in das Mischgefäss oder die Produkt-Öl-Zuleitung zurückgeführtes Reflux-Produkt-Öl bzw. Reflux-Diesel. Die Mischung aus Kunststoffwertstoff und Dieselöl wird im Mischgefäss mittels eines Rührwerks durchgemischt. Eine Pumpe, vorzugsweise eine unter dem Mischbehälter angebrachte Exzenterschneckenpumpe, pumpt diese erste Flüssigphase oder Dispersion, die Öl/Kunststoff-Mischung, in eine nachfolgende Reihe von 3 Heizzonen, bzw. 3 hintereinander geschaltete horizontal liegende Wärmetauscher.

Die Exzenterschneckenpumpe ist eine stark bevorzugte Pumpe, die verschleissarm und wartungsfreundlich ist, die aber nur dank der Zumischung von Dieselöl und den damit verbundenen verbesserten Fördereigenschaften eingesetzt werden kann.

Die oben erwähnten Wärmetauscher sind derart gestaltet, dass die Kunststoffwertstoff/Dieselöl-Mischung (in der Folge Kunststoff/Öl-Mischung) durch horizontale Röhren geleitet wird, die in Wärmeträgermittel eingebettet sind, so dass die Wärmeübertragungsfläche möglichst gross ist. Dadurch kann mit geringem Delta-T gearbeitete werden, was insbesondere in der dritten Zone Ablagerungen durch frühzeitige Zersetzung vermindert. Zudem können solche Wärmetauscher bei Bedarf leicht gereinigt werden.

Vor dem Eingang zur ersten Heizzone bzw. zum ersten Wärmetauscher aber nach der Pumpe wird der größere Teil des Produkt-Öls, z.B. durch eine Pumpe mit progressivem Hohlraum, entfernt und - wie bereits oben erwähnt - wieder zurück in den Mischbehälter oder allenfalls die Produkt-Öl-Zuleitung geführt. Dieses Öl wird als Reflux-Produkt-Öl oder Reflux-Diesel bezeichnet. Die rückführende Leitung bzw. das rückführende Rohr ist gegenüber der Zuleitung zum ersten Wärmetauscher vorzugsweise mit einem Filtersystem versehen, um zu verhindern dass Kunststoff-Flocken in den Mischbehälter zurückgeführt werden.

Im ersten Wärmetauscher wird die Temperatur des Kunststoff/Öl-Gemisches zuerst auf eine Temperatur im Bereich von 105°C bis 125°C, insbesondere ca. 120°C erhöht. Dies bewirkt dass restliche Feuchtigkeit verdampft und über einen ersten Entgasungsdom abgezogen werden kann. Das Kunststoff/Öl-Gemisch wird anschliessend in die zweite Heizzone, den zweiten Wärmetauscher geleitet. In der zweiten Heizzone bzw. im zweiten Wärmetauscher werden bei einer Temperatur von 180°C bis 250°C, insbesondere ca. 220°C Schadstoffe wie HCl und H₂S über einen zweiten Entgasungsdom entfernt. Diese sauren Schadstoffe werden vorzugsweise mit Natronlauge im Rahmen einer Gaswäsche neutralisiert und entfernt. Bei dieser tiefen Temperatur enthält das Abgas nur geringe Mengen Kohlenwasserstoffe.

Das gesamte Kunststoff/Öl-Gemisch, bei dem ein Teil der Kunststoffwertstoffe geschmolzen vorliegt und das auch als zweite Flüssigphase bzw. zweite Dispersion bezeichnet wird, wird dann in die dritte Heizzone bzw. den dritten Wärmetauscher befördert. In der dritten Heizzone bzw. dem dritten Wärmetauscher, wird das Kunststoff/Öl-Gemisch auf eine Temperatur im Bereich von 300°C bis 380°C aufgeheizt. Die Temperatur sollte vorzugsweise so gewählt werden, dass die gesamten Kunststoffwertstoffe verflüssigt werden. Gleichzeitig sollte die Koksbildung möglichst gering gehalten werden, wobei jeweils eine Abwägung der Wirtschaftlichkeit (z.B. Durchsatz vs. Verlust infolge Koksbildung) für die Wahl der jeweiligen Parameter beigezogen werden kann. Als gut geeignet hat sich beispielsweise ein Verfahren erwiesen, in dem mit Wärmeträgermittel einer Temperatur gearbeitet wird, die bis zu ca. 20°C über der angestrebten Temperatur liegt, vorzugsweise aber nicht über 390°C.

Das flüssige Kunststoff/Öl-Gemisch, auch als dritte Flüssigphase bezeichnet, wird zusammen mit bereits gebildeten gasförmigen Komponenten, aus dem dritten Wärmetauscher in einen Crackreaktor geleitet. In diesem Reaktor werden bei ca. 400°C die Kunststoff-Moleküle rein thermolytisch, d.h. ohne Verwendung von Katalysatoren, in ein im wesentlichen gasförmiges Kohlenwasserstoff-Gemisch zerlegt (gecrackt). Die Wärmeübertragung im Crackreaktor erfolgt zur Vermeidung von pyrolytischen Zersetzungsreaktionen vorzugsweise nicht oder nicht ausschliesslich durch die Reaktorwand (Heizkesselprinzip). Vorzugsweise wird vielmehr ein Prinzip ähnlich einem Tauchsieder eingesetzt, mittels dem die Wärmeübertragung im Inneren des Reaktors erfolgt. Das Prinzip dabei ist, dass der Wärmeeintrag über eine grosse Fläche mit möglichst kleinem Delta-T erfolgen soll, wodurch Anbacken und Koksbildung vermieden oder zumindest stark vermindert wird. In Abweichung zu einem Tauchsieder erfolgt der Wärmeübertrag aber vorzugsweise nicht über eine Spirale sondern über innerhalb des Reaktors senkrecht angeordnete, beidseitg von Schmelze umspülte und beidseitig Wärme abgebende Heizwände. Bei diesen Heizwänden handelt es sich um mit Wärmeträgermittel, insbesondere Wärmeträgeröl, gefüllte bzw. von Wärmeträgermittel durchflossene Hohlräume mit insbesondere parallel bzw. konzentrisch zu einander und vorzugsweise auch im wesentlichen konzentrisch zur Kesselwand angeordneten Wärmeübertragungsflächen. Durch die Wärmeübertragung mittels senkrecht stehender Wände wird ein bei Spiralen übliches Absetzen und Festbacken von Kunststoffwertstoffen auf im wesentlichen horizontal angeordneten Flächen mit entsprechenden Problemen (Materialverlust und verschlechterte Wärmeübertragung) vermieden. Die Heizwände können aus einem Element oder aus verschiedenen Elementen bestehen, welche den Materialtransport bzw. die Materialumwälzung innerhalb des Reaktors begünstigen. Die Heizwände können problemlos so angeordnet werden, dass ein übliches, zentral angeordnetes Rührwerk verwendet werden kann.

Aufgrund der grossen Wärmeübertragungsflächen kann das Wärmeträgermedium, das zur Erhitzung der Kunststoffschmelze im Crackreaktor verwendet wird, auf einer vergleichsweise tiefen Temperatur von vorzugsweise 405°C bis 420°C gehalten werden.

Das im Crackreaktor gebildete gasförmige Kohlenwasserstoff-Gemisch strömt aus dem Crackreaktor in einen aktiv gekühlten Partialkondensator. Dieser Kondensator wird vorzugsweise so eingestellt, dass Kohlenwasserstoffe, welche nicht dem gewünschten Produktcharakter, z.B. Diesel/Heizölcharakter entsprechen, kondensieren und zurück in die dritte Heizzone, den dritten Wärmetauscher, fliessen, wo sie wieder erhitzt und dem Crackreaktor zugeführt werden. Solche Kohlenwasserstoffe sind beispielsweise Kohlenwasserstoffe mit mehr als 20 oder 22 C-Atomen.

Bestandteile mit einem höheren Siedepunkt als z.B. C22 kondensieren und werden am Boden des Partialkondensators gesammelt. Die Füllhöhe wird durch eine Pumpe gesteuert, die die flüssigen Komponenten zurück in den dritten Wärmetauscher führt. Von dort wird die Schmelze wieder in den Crackreaktor überführt und weiter gecrackt, bis die Kohlenwasserstoffe eine Kettenlänge haben, die kürzer als z.B. 22 C-Atome ist, so dass sie den Partialkondensator passieren können. Mit dieser Technologie ist es möglich, die Bildung von langkettigen Kohlenwasserstoffen (Wachs / Paraffinen) zu vermeiden.

Je nach der Menge Kohlenwasserstoffe, die aus dem Partialkondensator in den dritten Wärmetauscher zurückgeführt werden müssen, wird die Zufuhr an "frischer Mischung" aus dem Mischgefäss reduziert.

Der bei niedrigeren Temperaturen siedende Teil (beispielsweise kleiner als C20 oder C22) wird durch den Partialkondensator nicht zurückgehalten und aus diesem in eine Destillationskolonne geschickt, in der eine fraktionierte Destillation durchgeführt wird.

Die Sumpftemperatur in dieser Destillationskolonne wird vorzugsweise durch einen sogenannten Reboiler geregelt. Die Sumpftemperatur wird geeigneterweise auf ca. 300 °C bis 350°C gehalten. Die Austrittstemperatur des Dampfes, bzw. die Kettenlänge der entsprechenden Fraktion, wird durch die Temperatur des aufströmenden Kohlenwasserstoff-Gases und vorzugsweise über einen Rücklaufstrom an höherkettigen Kohlenwasserstoffen gesteuert. Dieser Rücklaufstrom ist Teil der Flüssigkeit, die aus dem Bodenbereich der Destillationskolonne gezogen und mittels eines fünften Wärmetauscher auf die gewünschte Temperatur gebracht, üblicherweise gekühlt', wird. Ein Teil der im fünften Wärmetauscher gekühlten Flüssigkeit wird als Rücklaufstrom zur Temperatursteuerung oben in die Destillationskolonne zurückgeführt (Reflux). Nach der Ableitung des Rücklaufstroms wird in den restlichen Strom, den Produkt-Diesel-Strom, vorzugsweise ein Radikalinhibitor eingebracht, der als Stabilisator wirkt und die Neubildung von Paraffinen im Produkt-Diesel verhindert. Der aus dem Destillationsschritt entnommene und vorzugsweise mit einem Radikalinhibitor versetzte Produkt-Diesel wird in einem vierten Wärmetauscher abschliessend abgekühlt, gefiltert und aufbereitet. Nach dem Filtrationsschritt wird vorzugsweise ein Antioxidans zugesetzt, um den Abbau des Produkt-Diesels zu verhindern.

Der Dampf, der aus dem oberen Teil der Destillationskolonne austritt, umfasst die niedriger siedenden Komponenten (benzinartige Kohlenwasserstoffe, z.B. C1 bis C8). Dieser Dampf wird in einem Kondensator abgekühlt. Das Kondensat, ein Leichtsieder (z.B. C5-C8), wird in einen Vorratsbehälter abgelassen. Der bei Raumtemperatur nicht kondensierte Teil, C1 bis C4 bzw. Methan bis Butan, wird vorzugsweise mit den Abgasen/Brüden aus den Entgasungsdomen vereinigt und gemeinsam mit diesen weiter behandelt. Dazu eignet sich ein Wäscher, in dem die eintretenden Gase mit Natronlauge besprüht werden, so dass beispielsweise Chloride und Sulfide als NaCl und Na₂S entfernt werden können. Das gereinigte Gas wird mittels eines Kompressors in einen Vorratsbehälter verbracht. Dieses Gas kann in einem Brenner zum Erhitzen des Wärmeträgermittels verwendet werden.

Obschon hier ein Gesamtverfahren beschrieben wird, können einzelne erfinderische Aspekte dieses Verfahrens auch zur Verbesserung bestehender Anlagen verwendet werden. Solche Aspekte sind:
(i) Eintrag der Kunststoffwertstoffe über zwei Pufferbehälter. Dieses Eintragsystem ermöglicht Prozessführung mit geringen Mengen Inertgas (Stickstoff), was die Brennbarkeit der aus dem System abgeführten kohlenwasserstoffhaltigen Abgase verbessert.
(ii) Durch die Verwendung eines Mischbehälters, in dem die Kunststoffwertstoffe mit Diesel vermischt werden, verbessern sich die Fördereigenschaften, so dass mit einer Exzenterschneckenpumpe gearbeitet werden kann, die besonders wartungsfreundlich ist.
(iii) Durch die Verwendung einer ersten Heizzone bzw. eines ersten Wärmetauschers vor dem Crackreaktor, der bei Temperaturen wenig über 100°C arbeitet, wird der Anteil an Wasserdampf stark reduziert, was zu einer Optimierung des Gasvolumens führt.
(iv) Durch die Verwendung einer zweiten Heizzone bzw. eines zweiten Wärmetauschers vor dem Crackreaktor, der bei wenig über 200°C arbeitet, werden Schadstoffgase, wie HCl und H₂S ausgetrieben, ohne dass bereits merkbare Mengen an Kohlenwasserstoffen verloren gingen.
(v) Durch den Partialkondensator wird verhindert, dass Kohlenwasserstoffe, die eine gewünschte Länge überschreiten, ins Produkt-Öl gelangen.
(vi) Die fraktionierte Destillation ermöglicht eine sehr genaue Auftrennung der Kohlenwasserstoffe. Durch die Einstellung der Sumpftemperatur einerseits aber auch durch die Temperatur und den Massefluss an in die Destillationskolonne zurückgeführter langkettiger Fraktion lässt sich diese Auftrennung in kurzkettige und langkettige Fraktion gezielt steuern.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figur.

Die **Figur** zeigt ein Schema einer erfindungsgemässen Anlage.

### Weg(e) zur Ausführung der Erfindung

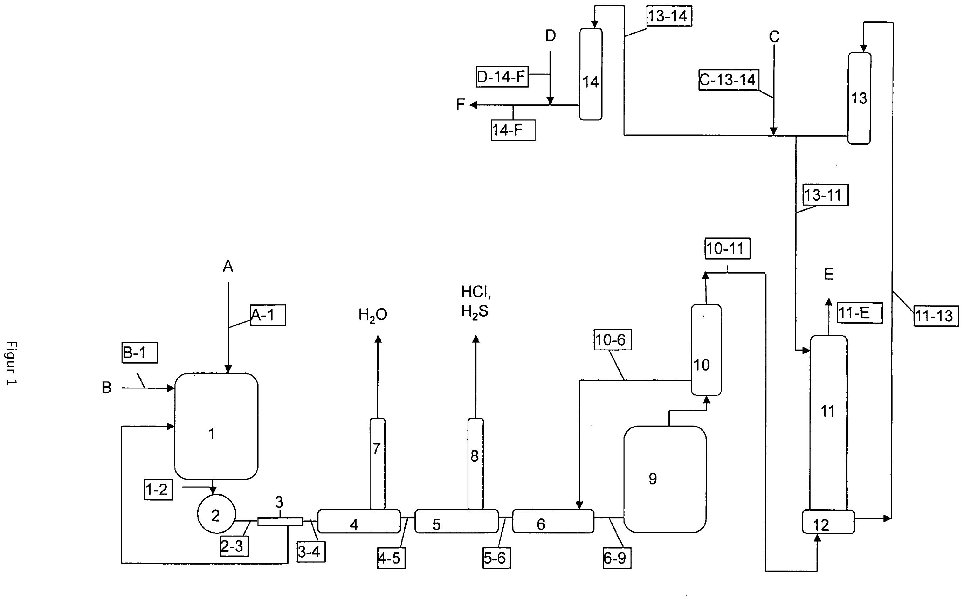

Das Flussdiagramm einer bevorzugten erfindungsgemässen Anlage ist in Figur 1 dargestellt. In der folgenden Figurenbeschreibung werden Zugeführte und abgeführte Stoffe, mit Buchstaben bezeichnet und die Leitungen mit ihrem Ausgangs und Endpunkt.

Gereinigte und vorsortierte Polyolefin-Kunststoffwertstoffe werden in einem Bunker (nicht gezeigt) gelagert. Diese Kunststoffwertstoffe enthalten möglicherweise immer noch geringe Anteile an Störstoffen, wie z.B. chlor- und/oder schwefelhaltige Verbindungen, Gummi, Metalle, Sand etc. Da das Aufbereitungsverfahren unter weitgehendem Sauerstoffausschluss durchgeführt werden muss, werden die Kunststoffwertstoffe der Anlage mittels eines vorzugsweise zweistufigen Pufferbehältersystems (nicht gezeigt) zugeführt. Der erste Pufferbehälter wird kontinuierlich gefüllt, die Luft durch Stickstoff ersetzt und der Behälter anschliessend diskontinuierlich entleert. Der zweite Pufferbehälter A speist den Kunststoff über Leitung A-1 kontinuierlich in das System ein und wird diskontinuierlich gefüllt. Die Ausgaberate vom Puffersystem in ein Mischgefäss 1 wird beispielsweise mittels einer Lastzelle gemessen.

Im Mischgefäss 1 wird dem Kunststoffwertstoff über Zuleitung B-1 Dieselöl zugeführt, vorzugsweise Diesel-Öl (auch als Produkt-Öl bezeichnet), das mittels diesem Verfahren gewonnen wurde, sowie vor der ersten Heizzone über Leitung 3-1 abgezogenes Reflux-Produkt-Öl bzw. Reflux-Diesel. Die Mischung aus Kunststoffwertstoff und Dieselöl wird im Mischgefäss 1 mittels eines Rührwerks durchgemischt. Eine Pumpe, vorzugsweise eine unter dem Mischbehälter 1 angebrachte Exzenterschneckenpumpe 2, pumpt die Öl/Kunststoff-Mischung über die Leitungen 1-2, 2-3 und 3-4 in eine nachfolgende Reihe von 3 Heizzonen, bzw. 3 hintereinander geschaltete horizontal liegende Wärmetauscher 4, 5 und 6. Diese Wärmetauscher sind derart gestaltet, dass die Kunststoff/Öl-Mischung durch horizontale Rohre geleitet wird, die in Wärmeträgermittel eingebettet sind, so dass die Wärmeübertragungsfläche möglichst gross ist.

Die Zumischung von Dieselöl verbessert die Fördereigenschaften der Kunststoff/Öl-Mischung, so dass diese mittels Excenterschneckenpumpe 2 pumpbar wird. Um die Menge Dieselöl aber möglichst gering zu halten, wird nach der Pumpe 2 aber vor dem Eingang zur ersten Heizzone bzw. zum ersten Wärmetauscher 4 vorzugsweise der größere Teil des Produkt-Öls, z.B. durch eine Pumpe 3 mit progressivem Hohlraum, entfernt und über Leitung 3-1 wieder zurück in den Mischbehälter 1 oder - alternativ oder zusätzlich - in die Leitung B-1 geführt. Dieses Öl wird als Reflux-Produkt-Öl bezeichnet. Die rückführende Leitung bzw. das rückführende Rohr ist gegenüber der Zuleitung zum ersten Wärmetauscher 4 mit einem Filtersystem (nicht gezeigt) bestückt, um zu verhindern dass Kunststoff-Flocken in den Mischbehälter 1 zurückgeführt werden.

Im ersten Wärmetauscher 4 wird die Temperatur des Kunststoff/Öl-Gemisches zuerst auf eine Temperatur im Bereich von 105°C bis 125°C, insbesondere ca. 120°C erhöht. Dies bewirkt, dass restliche Feuchtigkeit verdampft und über einen ersten Entgasungsdom 7 abgezogen werden kann. Das Kunststoff/Öl-Gemisch gelangt über Leitung 4-5 in die zweite Heizzone. In der zweiten Heizzone bzw. im zweiten Wärmetauscher 5 werden bei einer Temperatur von 180°C bis 250°C, insbesondere ca. 220°C Schadstoffe wie HCl und H₂S über einen zweiten Entgasungsdom 8 entfernt. Diese sauren Schadstoffe werden vorzugsweise mit Natronlauge im Rahmen einer Gaswäsche (nicht gezeigt) neutralisiert und entfernt. Bei dieser tiefen Temperatur enthält das Abgas nur geringe Mengen Kohlenwasserstoffe. Das gesamte Kunststoff/Öl-Gemisch wird dann über Leitung 5-6 in die dritte Heizzone 6 befördert. In der dritten Heizzone bzw. dem dritten Wärmetauscher 6, wird das Kunststoff/Öl-Gemisch auf eine Temperatur im Bereich von 300°C bis 380°C aufgeheizt. Die Temperatur soll so gewählt werden, dass die gesamten Kunststoffwertstoffe verflüssigt werden. Gleichzeitig sollte die Koksbildung möglichst gering gehalten werden, wobei jeweils eine Abwägung der Wirtschaftlichkeit (z.B. Durchsatz vs. Verlust infolge Koksbildung) für die Wahl der jeweiligen Parameter beigezogen werden kann. Als gut geeignet hat sich beispielsweise ein Verfahren erwiesen, in dem mit Wärmeträgermittel einer Temperatur gearbeitet wird, die bis zu ca. 20°C über der angestrebten Temperatur liegt, vorzugsweise aber nicht über 390°C.

Das flüssige Kunststoff/Öl-Gemisch wird, zusammen mit bereits gebildeten gasförmigen Komponenten, aus der dritten Heizzone, dem dritten Wärmetauscher 6 über Leitung 6-9 in den Crackreaktor geleitet. In diesem Reaktor werden bei ca. 400°C die Kunststoff-Moleküle rein thermolytisch, d.h. ohne Verwendung von Katalysatoren, in ein gasförmiges Kohlenwasserstoff-Gemisch zerlegt (gecrackt). Die Wärmeübertragung im Crackreaktor erfolgt zur Vermeidung von pyrolytischen Zersetzungsreaktionen vorzugsweise nicht oder nicht ausschliesslich durch die Reaktorwand (Heizkesselprinzip) sondern unter Anwendung eines Prinzips ähnlich einem Tauchsieder, mittels dem die Wärme direkt ins Innere der Reaktoren eingetragen wird. Das Prinzip dabei ist, dass der Wärmeeintrag über eine grosse Fläche mit möglichst kleinem Delta-T erfolgen soll, wodurch Anbacken und Koksbildung vermieden oder zumindest stark vermindert wird. In Abweichung zu einem Tauchsieder erfolgt der Wärmeübertrag vorzugsweise nicht über eine Spirale sondern über innerhalb des Reaktors senkrecht angeordnete, beidseitig von Schmelze umspülte und beidseitig Wärme abgebende Heizwände (nicht gezeigt). Bei diesen Heizwänden handelt es sich um mit Wärmeträgermittel, insbesondere Wärmeträgeröl, gefüllte bzw. von Wärmeträgermittel durchflossene Hohlräume mit insbesondere parallel bzw. konzentrisch zu einander und vorzugsweise auch im wesentlichen konzentrisch zur Kesselwand angeordneten Wärmeübertragungsflächen. Durch die Wärmeübertragung mittels senkrecht stehender Wände wird ein bei Spiralen übliches Absetzen und Festbacken von Kunststoffwertstoffen auf im wesentlichen horizontal angeordneten Flächen vermieden. Dadurch werden infolge dieses Festsetzens und Anbackens erzeugte Probleme wie Materialverlust und verschlechterte Wärmeübertragung vermieden. Die Heizwände können aus einem Element oder aus verschiedenen Elementen/Segmenten bestehen, welche den Materialtransport bzw. die Materialumwälzung innerhalb des Reaktors begünstigen. Die Heizwände können problemlos so angeordnet werden, dass ein übliches, zentral angeordnetes Rührwerk verwendet werden kann.

Aufgrund der grossen Wärmeübertragungsflächen kann das Wärmeträgermedium, das zur Erhitzung der Kunststoffschmelze im Crackreaktor verwendet wird, auf einer vergleichsweise tiefen Temperatur von vorzugsweise 405°C bis 420°C gehalten werden.

Das im Crackreaktor 9 gebildete gasförmige Kohlenwasserstoff-Gemisch strömt aus dem Crackreaktor 9 in einen aktiv gekühlten Partialkondensator 10. Dieser Kondensator 10 wird vorzugsweise so eingestellt, dass Kohlenwasserstoffe, welche nicht dem gewünschten Produktcharakter, z.B. Diesel/Heizölcharakter entsprechen, kondensieren und zurück in die dritte Heizzone, den dritten Wärmetauscher 6 geleitet werden können, wo sie weiter aufgespaltet werden. Solche Bestandteile mit beispielsweise einem Siedepunkt oberhalb 400°C kondensieren und werden am Boden des Partialkondensators 10 gesammelt. Die Füllhöhe wird durch eine Pumpe gesteuert, die die flüssigen Komponenten zurück in die dritte Heizzone 6 führt, wo sie abermals erhitzt und in den Crackreaktor 9 zurückgeführt und weiter gecrackt werden, bis die Kohlenwasserstoffe eine Kettenlänge haben, die kürzer als z.B. 22 C-Atome ist, so dass sie den Partialkondensator 10 passieren können. Mit dieser Technologie ist es möglich, die Bildung von langkettigen Kohlenwasserstoffen (Wachs / Paraffinen) zu vermeiden. Kohlenwasserstoffe, die aus dem Partialkondensator 10 zurückgeführt werden, sind beispielsweise Kohlenwasserstoffe mit mehr als 20 oder 22 C-Atomen.

Bei der Bildung grosser Mengen an aus dem Partialkondensator 10 zurückzuführenden Kohlenwasserstoffen, kann die Zufuhr an Mischung aus dem Mischgefäss 1 reduziert werden.

Der bei niedrigeren Temperaturen siedende Teil bzw. Kohlenwasserstoff-Dampf (z.B. kleiner als C20 oder C22) wird durch den Partialkondensator nicht zurückgehalten und aus diesem über Leitung 10-11 in eine Destillationskolonne 11 geschickt, in der eine fraktionierte Destillation durchgeführt wird. Die Sumpftemperatur in dieser Destillationskolonne 11 wird vorzugsweise durch einen Reboiler 12 geregelt. Die Sumpftemperatur wird beispielsweise auf ca. 360 °C bis 390°C gehalten. Die Austrittstemperatur des Dampfes E, bzw. die Kettenlänge der entsprechenden Fraktion, wird durch die Temperatur des aufströmenden Kohlenwasserstoff-Gases und den Massenfluss und die Temperatur des über die Leitungen 11-13, 13-11 zurückgeführten Rücklaufstroms an höherkettigen Kohlenwasserstoffen gesteuert, die oben in die Destillationskolonne 11 eingespeist werden. Dieser Rücklaufstrom ist Teil der Flüssigkeit, die aus dem Bodenbereich der Destillationskolonne 11 gezogen wird und z.B. mittels eines fünften Wärmetauscher 13 abgekühlt wird.

Nachdem ein Teil der im Wärmetauscher 13 gekühlten Flüssigkeit als Rücklaufstrom über die Leitung 13-11 aus der Flüssigkeit, die aus dem Bodenbereich der Destillationskolonne 11 gezogen wird, zur Temperatursteuerung abgeleitet worden ist, wird in das in der Leitung 13-14 verbleibenden Produkt-Öl vorzugsweise, über Leitung C-13-14, ein Radikalinhibitor C eingebracht, der als Stabilisator wirkt und die Neubildung von Paraffinen verhindert. Das über Leitung 13-14 aus dem Destillationsschritt entnommene Produkt-Öl wird in einem vierten Wärmetauscher 14 weiter abgekühlt, gefiltert und aufbereitet. Nach dem Filtrationsschritt wird über Leitung D-14-F vorzugsweise ein Antioxidans zugesetzt, um den Abbau des Produkt-Öls zu verhindern.

Der Dampf E, der aus dem oberen Teil der Destillationskolonne 11 kommt, umfasst die niedriger siedenden Komponenten (benzinartige Kohlenwasserstoffe, z.B. C1 bis C8). Dieser Dampf wird in einem Kondensator (nicht gezeigt) abgekühlt. Das bei 25 bis 30°C erhaltene Kondensat, ein Leichtsieder (z.B. C5 bis C8), wird in einen Vorratsbehälter (nicht gezeigt) abgelassen. Der bei Raumtemperatur nicht kondensierte Teil, C1 bis C4 bzw. Methan bis Butan, wird vorzugsweise mit den Brüden aus den Entgasungsdomen 7, 8 in einem Wäscher (nicht gezeigt) vermischt, in dem die eintretenden Gase gereinigt werden. Diese Reinigung umfasst vorzugsweise ein Waschen mittels Natronlauge, bei der Natronlauge über die eintretenden Gase gesprüht wird, wonach die Chloride als NaCl und die Sulfide Na₂S entfernt werden können. Das gereinigte kohlenwasserstoffhaltige Gas wird mittels eines Kompressors in einen Vorratsbehälter verbracht. Dieses Gas kann in einem Brenner zum Erhitzen des Wärmeträgermittels verwendet werden.

## Patentansprüche

1. Verfahren zum Gewinnen von Kohlenwasserstoffen aus Polyolefin-Kunststoffwertstoffen mittels Crackens, wobei
(i) die Kunststoffwertstoffe unter Verwendung eines Eintragungssystems unter Luftabschluss bzw. in Inertgas einem Mischgefäss (1) zugeführt werden, in dem sie mit Dieselöl zu einer ersten Flüssigphase oder Dispersion, einer Kunststoff/Öl-Mischung, vermischt und anschliessend nacheinander drei Heizzonen bzw. Wärmetauschern (4, 5, 6) und einem Crackreaktor (9) zugeführt werden, wobei
(ii) vor dem Eingang zu einer ersten Heizzone aber nach einer Pumpe (2), welche diese erste Flüssigphase oder Dispersion in eine nachfolgende Reihe von 3 Heizzonen pumpt, der größere Teil des Produkt-Öls entfernt und wieder zurück in den Mischbehälter oder die Produkt-Öl-Zuleitung geführt wird,
(iii) in der ersten Heizzone bzw. dem ersten Wärmetauscher (4) bei 105 bis 125°C in einer ersten Gasphase Wasserdampf abgeführt wird,
(iv) in einer zweiten Heizzone bzw. einem zweiten Wärmetauscher (5) bei einer Temperatur von 180 bis 250°C eine Auftrennung in
- eine zweite Gasphase, die primär aus sauren Gasen besteht und über einen Entgasungsdom (8) entfernt wird, und
- eine zweite Flüssigphase oder Dispersion, in der ein Teil der Kunststoffwertstoffe als Schmelze vorliegt, erfolgt,
(v) in einer dritten Heizzone bzw. einem dritten Wärmetauscher (6) bei einer Temperatur von 300°C bis 380°C die zweite Flüssigphase weiter aufgeschmolzen und anschliessend zusammen mit bereits gebildeten kohlenwasserstoffhaltigen Dämpfen
(vi) dem Crackreaktor (9) zugeführt wird, in dem die geschmolzenen Kohlenwasserstoffe bei ca. 400°C rein thermolytisch gecrackt werden, wobei die gasförmigen Kohlenwasserstoffe einem Partialkondensator (10) zugeführt werden, in dem langkettige Kohlenwasserstoffe kondensieren und in die dritte Heizzone bzw. den dritten Wärmetauscher (6) zurückgeführt werden,
(vii) die Gase aus dem Partialkondensator (10) einer Destillationskolonne (11) zugeführt werden, in der sie in eine gasförmige und eine flüssige Fraktion zerlegt und aus der die flüssige Fraktion als Produkt-Diesel, die gasförmige Fraktion als Leichtsieder abgezogen werden.

2. Verfahren gemäss Anspruch 1, **dadurch gekennzeichnet, dass** die Temperatur in der ersten Heizzone (4) ca. 120°C und/oder in der zweiten Heizzone (5) ca. 220°C beträgt.

3. Verfahren gemäss einem der Ansprüche 1 oder 2, **dadurch gekennzeichnet, dass** die zweite Gasphase mit Natronlauge neutralisiert wird.

4. Verfahren gemäss einem der Ansprüche 1 bis 3, **dadurch gekennzeichnet, dass** ein Teil der flüssigen Fraktion aus der Destillationskolonne (11) abgeleitet und in einem vierten Wärmetauscher (14) gequencht und anschliessend in einem Lagerbehälter eingelagert wird.

5. Verfahren gemäss Anspruch 4, **dadurch gekennzeichnet, dass** ein Teil der flüssigen Fraktion aus der Destillationskolonne (11) abgeleitet und nach Kühlung mittels eines fünften Wärmetauschers (13) aufgetrennt wird in einen ersten Teil und einen zweiten Teil, dass der erste Teil aus dem Verfahren als Produkt-Diesel entfernt und dem vierten Kondensator (14) zugeführt wird und dass der zweite Teil als Reflux-Diesel oben in die Destillationskolonne (11) zurückgeführt wird.

6. Verfahren gemäss Anspruch 5, **dadurch gekennzeichnet, dass** dem Produkt-Diesel vor dem vierten Kondensator (14) ein Radikalinhibitor (C) zugesetzt wird.

7. Verfahren gemäss einem der Ansprüche 4 bis 6, **dadurch gekennzeichnet, dass** dem Produkt-Diesel nach dem vierten Kondensator (14) ein Antioxidans (D) zugegeben wird.

8. Verfahren gemäss einem der Ansprüche 1 bis 7, **dadurch gekennzeichnet, dass** die Kunststoff/Öl-Mischung mittels einer Exzenterschneckenpumpe (2) aus dem Mischgefäss (1) in die erste Heizzone bzw. den ersten Wärmetauscher (4) gefördert wird.

9. Anlage, geeignet für die Durchführung des Verfahrens gemäss einem der Ansprüche 1 bis 8, **dadurch gekennzeichnet, dass** sie ein Mischgefäss (1), eine Pumpe (2), drei Heizzonen bzw. Wärmetauscher (4, 5, 6), einen Crackreaktor (9), einen Partialkondensator (10), eine Destillationskolonne (11) und einen vierten Wärmetauscher (14) umfasst, wobei das Mischgefäss (1) über die Pumpe (2) mit der ersten Heizzone bzw. dem ersten Wärmetauscher (4), die erste Heizzone bzw. der erste Wärmetauscher (4) mit der zweiten Heizzone bzw. dem zweiten Wärmetauscher (5), die zweite Heizzone bzw. der zweiten Wärmetauscher (5) mit der dritten Heizzone bzw. dem dritten Wärmetauscher (6) und die dritte Heizzone bzw. der dritte Wärmetauscher (6) mit dem Crackreaktor (9), der Crackreaktor (9) mit einem Partialkondensator (10) und der Partialkondensator (10) mit einer Destillationskolonne (11) verbunden ist, wobei die Temperatur in allen drei Heizzonen bzw. Wärmetauschern (4, 5, 6) und im Crackreaktor (9) unabhängig von einander regulierbar ist, wobei die erste Heizzone bzw. der erste Wärmetauscher (4) und die zweite Heizzone bzw. der zweite Wärmetauscher (5) je mit einer Ableitung (7), (8) für Gase versehen sind und wobei die Anlage zwischen der Pumpe (2) und der ersten Heizzone bzw. dem ersten Wärmetauscher (4) eine Leitung (3-1) ins Mischgefäss (1) aufweist und vom Partialkondensator (10) eine Leitung (10-6) in die dritte Heizzone bzw. den dritten Wärmetauscher (6).

10. Anlage gemäss Anspruch 9, **dadurch gekennzeichnet, dass** sie vor dem Mischgefäss (1) ein zweiteiliges Pufferbehältersystem zur Zuführung von Kunststoffwertstoffen aufweist, wobei der erste Pufferbehälter ausgelegt ist für den Austausch von Luft gegen Stickstoff und um kontinuierlich gefüllt und diskontinuierlich entleert zu werden und wobei der zweite Pufferbehälter (A) den Kunststoff kontinuierlich in den Mischbehälter (1) einspeist und diskontinuierlich gefüllt wird.

11. Anlage gemäss einem der Ansprüche 9 bis 10, **dadurch gekennzeichnet, dass** der Crackreaktor (9) mindestens teilweise mittels innerhalb des Reaktors senkrecht angeordneten Heizwänden beheizt wird.

12. Anlage gemäss einem der Ansprüche 9 bis 11, **dadurch gekennzeichnet, dass** die Destillationskolonne (11) an ihrem unteren Ende mit einer Ableitung für Flüssigkeit und diese Ableitung mit einem vierten Wärmetauscher (14) verbunden ist.

13. Anlage gemäss Anspruch 12, **dadurch gekennzeichnet, dass** sie dem vierten Wärmetauscher (14) vorgeschaltet einen fünften Wärmetauscher (13) aufweist und zwischen dem fünften Wärmetauscher (13) und dem vierten Wärmetauscher (14) eine Ableitung für die Rückführung von Flüssigkeit in den Kopf der Destillationskolonne (11).

## Claims

1. Method for obtaining hydrocarbons from recyclable polyolefin-plastics by means of cracking, wherein
(i) the recyclable plastics are supplied to a mixing container (1) by using a feeding system under exclusion of air or in inert gas, respectively, inside which mixing container they are mixed with diesel oil to form a first liquid phase or dispersion, a plastic/oil-mixture, and subsequently are supplied one after the other to three heating zones or heat exchangers (4, 5, 6), respectively, and a cracking reactor (9), wherein
(ii) the major part of the product oil is removed and guided back into the mixing container or the product-oil inlet pipe before the inlet into a first heating zone but after a pump (2) which pumps this first liquid phase or dispersion into a subsequent row of three heating zones,
(iii) in a first heating zone or a first heat exchanger (4), respectively, water vapour is evacuated in a first gas phase at 105 to 125°C,
(iv) in a second heating zone or a second heat exchanger (5), respectively, a separation in
- a second gas phase which consists primarily of acidic gases and is removed via a degassing dome (8), and
- a second liquid phase or dispersion, where a part of the recyclable plastics is present as melt,
is carried out at a temperature of 180 to 250°C,
(v) in a third heating zone or a third heat exchanger (6), respectively, the second liquid phase is melted further at a temperature of 300°C to 380°C and subsequently, together with already formed vapour containing hydrocarbons,
(vi) supplied to a cracking reactor (9) inside which the melted hydrocarbons are cracked at around 400°C in a purely thermolytic way, wherein the gaseous hydrocarbons are supplied to a partial condenser (10) inside which long-chained hydrocarbons condens and are returned to the third heating zone or the third heat exchanger (6), respectively,
(vii) the gases are supplied from the partial condenser (10) to a distillation column (11), inside which they are separated in a gaseous and a liquid fraction and from which the liquid fraction is removed as product diesel and the gaseous fraction as low boiler.

2. Method according to claim 1, **characterized in that** the temperature in the first heating zone (4) is of about 120°C and/or in the second heating zone (5) of about 220°C.

3. Method according to one of the claims 1 or 2, **characterized in that** the second gaseous phase is neutralized with caustic soda.

4. Method according to one of the claims 1 to 3, **characterized in that** a part of the liquid fraction is diverted from the distillation column (11) and is quenched in a fourth heat exchanger (14) and subsequently is stored in a storage container.

5. Method according to claim 4, **characterized in that** a part of the liquid fraction is diverted from the distillation column (11) and is separated in a first part and a second part after cooling by a fifth heat exchanger (13), **in that** the first part is removed from the method as product diesel and is supplied to the fourth condenser (14) and **in that** the second part is returned into the distillation column (11) at the top as reflux diesel.

6. Method according to claim 5, **characterized in that** a radical inhibitor (C) is added to the product diesel before the fourth condenser (14).

7. Method according to one of the claims 4 to 6, **characterized in that** an antioxidant (D) is added to the product diesel after the fourth condenser (14).

8. Method according to one of the claims 1 to 7, **characterized in that** the plastic/oil-mixture is transported from the mixing container (1) into the first heating zone or the first heat exchanger (4), respectively, by means of an eccentric screw pump (2).

9. Installation, suitable for carrying out the method according to one of the claims 1 to 8, **characterized in that** it comprises a mixing container (1), a pump (2), three heating zones or heat exchangers (4, 5, 6), respectively, a cracking reactor (9), a partial condenser (10), a distillation column (11) and a fourth heat exchanger (14), wherein the mixing container (1) is connected to the first heating zone or the first heat exchanger (4), respectively, via the pump (2), the first heating zone or the first heat exchanger (4), respectively, is connected to the second heating zone or the second heat exchanger (5), respectively, the second heating zone or the second heat exchanger (5), respectively, is connected to the third heating zone or the third heat exchanger (6), respectively, and the third heating zone or the third heat exchanger (6), respectively, is connected to the cracking reactor (9), the cracking reactor (9) is connected to a partial condenser (10) and the partial condenser (10) is connected to a distillation column (11), wherein the temperature in all three heating zones or heat exchangers (4, 5, 6) and in the cracking reactor (9) is regulated independently from one another, wherein the first heating zone or the first heat exchanger (4), respectively, and the second heating zone or the second heat exchanger (5), respectively, are each provided with an outlet pipe (7), (8) for gases and wherein the installation has a pipe (3-1) leading to the mixing container (1) between the pump (2) and the first heating zone or the first heat exchanger (4), respectively, and a pipe (10-6) leading from the partial condenser (10) to the third heating zone or the third heat exchanger (6), respectively.

10. Installation according to claim 9, **characterized in that** it has a two-piece buffer container system for supplying recyclable plastics before the mixing container (1), wherein the first buffer container is designed for the exchange of air with nitrogen and to be continuously filled and discontinuously emptied and wherein the second buffer container (A) feeds the plastic continuously into the mixing container (1) and is discontinuously filled.

11. Installation according to one of the claims 9 to 10, **characterized in that** the cracking reactor (9) is heated at least partially by means of heating walls arranged vertically inside the reactor.

12. Installation according to one of the claims 9 to 11, **characterized in that** the distillation column (11) is connected at its bottom end to an outlet pipe for liquid and this outlet pipe is connected to a fourth heat exchanger (14).

13. Installation according to claim 12, **characterized in that** it has a fifth heat exchanger (13) arranged before the fourth heat exchanger (14) and an outlet pipe between the fifth heat exchanger (13) and the fourth heat exchanger (14) for returning liquid into the head of the distillation column (11).

## Revendications

1. Procédé pour obtenir des hydrocarbures à partir de substances de valeur en plastique de polyoléfine par craquage, dans lequel
(i) les substances de valeur en plastique étant alimentés dans un récipient de mélange (1) en utilisant un système d'alimentation en l'absence d'air ou bien dans un gaz inerte, dans lequel récipient de mélange ils sont mélangés avec de l'huile diesel afin de former une première phase liquide ou dispersion, une mélange plastique/huile, et ensuite étant alimentés de manière séquentielle dans trois zones de chauffage ou bien échangeurs de chaleur (4, 5, 6) et un réacteur de craquage (9),
(ii) la plus grande partie du produit d'huile étant enlevée et retournée dans le récipient de mélange ou le tuyau d'entrée du produit d'huile avant l'entrée dans une première zone de chauffage mais après une pompe (2) qui pompe cette première phase liquide ou dispersion dans une ligne ultérieure de trois zones de chauffage,
(iii) dans la première zone de chauffage ou bien le premier échangeur de chaleur (4) de la vapeur d'eau étant évacuée à 105 jusqu'à 125°C dans une première phase gazeuse,
(iv) dans une deuxième zone de chauffage ou bien un deuxième échangeur de chaleur (5) une séparation dans
- une deuxième phase gazeuse qui consiste premièrement de gazes acides et qui est évacuée par un dôme de dégazage (8), et
- une deuxième phase liquide ou dispersion où une partie des plastiques est présente sous forme de fonte,
étant effectuée à une température de 180 à 250°C,
(v) dans une troisième zone de chauffage ou bien un troisième échangeur de chaleur (6) la deuxième phase liquide étant fondue plus à une température de 300°C à 380°C et ensuite alimentée ensemble avec de la vapeur contenant des hydrocarbures déjà présente,
(vi) dans le réacteur de craquage (9), à l'intérieur duquel les hydrocarbures fondues sont craqués à environ 400°C de manière purement thermolytique, les hydrocarbures gazeuses étant alimentés à un condenseur partiel (10) dans lequel des hydrocarbures à chaîne longue condensent et sont retournés dans la troisième zone de chauffage ou bien le troisième échangeur de chaleur (6),
(vii) les gazes étant alimentés à partir du condenseur partiel (10) à une colonne de distillation (11), à l'intérieur de laquelle ils sont séparés dans une fraction gazeuse et une fraction liquide et à partir de laquelle la fraction liquide est séparé comme produit diesel et la fraction gazeuse est évacuée sous forme de chaudière basse température.

2. Procédé selon la revendication 1, **caractérisé en ce que** la température dans la première zone de chauffage (4) est d'environ 120°C et/ou dans la deuxième zone de chauffage (5) d'environ 220°C.

3. Procédé selon l'une des revendications 1 et 2, **caractérisé en ce que** la deuxième phase gazeuse est neutralisée avec de la soude caustique.

4. Procédé selon l'une des revendications 1 à 3, **caractérisé en ce qu'**une partie de la fraction liquide est extraite de la colonne de distillation (11) et trempée dans un quatrième échangeur de chaleur (14) et ensuite stockée dans un récipient de stockage.

5. Procédé selon la revendication 4, **caractérisé en ce qu'**une partie de la fraction liquide est extraite de la colonne de distillation (11) et séparée dans une première partie et une deuxième partie après un refroidissement par un cinquième échangeur de chaleur (13), **en ce que** la première partie est extraite du procédé sous forme de produit diesel et alimentée dans le quatrième condenseur (14) et **en ce que** la deuxième partie est retournée dans la colonne de distillation (11) au haut sous forme de diesel de reflux.

6. Procédé selon la revendication 5, **caractérisé en ce qu'**un inhibiteur de radicaux (C) est ajouté au produit diesel avant le quatrième condenseur (14) .

7. Procédé selon l'une des revendications 4 à 6, **caractérisé en ce qu'**un antioxydant (D) est ajouté au produit diesel après le quatrième condenseur (14).

8. Procédé selon l'une des revendications 1 à 7, **caractérisé en ce que** le mélange plastique/huile est transporté à partir du récipient de mélange (1) dans la première zone de chauffage ou bien le premier échangeur de chaleur (4) à l'aide d'une pompe excentrique à vis (2) .

9. Installation, appropriée pour effectuer le procédé selon l'une des revendications 1 à 8, **caractérisée en ce qu'**elle comprend un récipient de mélange (1), une pompe (2), trois zones de chauffage ou bien échangeurs de chaleur (4, 5, 6), un réacteur de craquage (9), un condenseur partiel (10), une colonne de distillation (11) et un quatrième échangeur de chaleur (14), le récipient de mélange (1) étant connecté avec la première zone de chauffage ou bien le premier échangeur de chaleur (4) par l'intermédiaire de la pompe (2), la première zone de chauffage ou bien le premier échangeur de chaleur (4) étant connecté avec la deuxième zone de chauffage ou bien le deuxième échangeur de chaleur (5), la deuxième zone de chauffage ou bien le deuxième échangeur de chaleur (5) étant connecté avec la troisième zone de chauffage ou bien le troisième échangeur de chaleur (6), et la troisième zone de chauffage ou bien le troisième échangeur de chaleur (6) étant connectée avec le réacteur de craquage (9), le réacteur de craquage (9) étant connecté avec le condenseur partiel (10) et le condenseur partiel (10) étant connecté avec une colonne de distillation (11), la température dans toutes les trois zones de chauffage ou échangeurs de chaleur (4, 5, 6) et dans le réacteur de craquage (9) étant régulée indépendamment l'une de l'autre, la première zone de chauffage ou bien le premier échangeur de chaleur (4) et la deuxième zone de chauffage ou bien le deuxième échangeur de chaleur (5) étant chacun doté d'un tuyau de sortie (7), (8) pour des gazes et l'installation ayant un tuyau (3-1) qui mène au récipient de mélange (1) entre la pompe (2) et la première zone de chauffage ou bien le premier échangeur de chaleur (4) et un tuyau (10-6) qui mène du condenseur partiel (10) à la troisième zone de chauffage ou bien le troisième échangeur de chaleur (6).

10. Installation selon la revendication 9, **caractérisée en ce qu'**elle a un système de récipient tampon en deux pièces pour alimenter du plastique avant le récipient de mélange (1), le premier récipient tampon étant conçu pour l'échange d'air avec de l'azote et pour être rempli de manière continue et vidé de manière discontinue et le deuxième récipient tampon (A) alimentant le plastique de manière continue dans le récipient de mélange (1) et étant vidé de manière discontinue.

11. Installation selon l'une des revendications 9 à 10, **caractérisée en ce que** le réacteur de craquage (9) est chauffé au moins partiellement à l'aide des parois de chauffage arrangées de manière verticale à l'intérieur du réacteur.

12. Installation selon l'une des revendications 9 à 11, **caractérisée en ce que** la colonne de distillation (11) est connectée à son fond avec un tuyau de sortie pour le liquide et ce tuyau de sortie est connecté avec un quatrième échangeur de chaleur (14).

13. Installation selon la revendication 12, **caractérisée en ce qu'**elle a un cinquième échangeur de chaleur (13) arrangé avant le quatrième échangeur de chaleur (14) et un tuyau de sortie entre le cinquième échangeur de chaleur (13) et le quatrième échangeur de chaleur (14) afin de retourner du liquide dans la tête de la colonne de distillation (11).
